# EUROPEAN PATENT SPECIFICATION

(11) **EP 3 155 772 B1**
(45) Date of publication and mention of the grant of the patent: **08.01.2020**
(21) Application number: 15891984.5
(22) Date of filing: 15.07.2015
(51) Int. Cl.: H04L 12/721, G06F 13/00, H04L 12/70, H04L 12/727, H04L 12/58, H04L 12/733

(54) **A NEW INSTANT MESSAGING(IM) ROUTING METHOD AND ROUTER**
NEUES ROUTINGVERFAHREN FÜR SOFORTNACHRICHTEN (IM) UND ROUTER
NOUVEAUX PROCÉDÉ DE ROUTAGE ET ROUTEUR DE MESSAGERIE INSTANTANÉE (IM)

(30) Priority: 11.05.2015 CN 201510234444
(43) Date of publication of application: 19.04.2017
(73) Proprietor: Beijing VRV Software Corporation Ltd., Beijing 100081 (CN)
(72) Inventor: ZHONG, Li, Beijing 100081 (CN); JIANG, Yi, Beijing 100081 (CN); HU, Jianbin, Beijing 100081 (CN); LIN, Hao, Beijing 100081 (CN)
(74) Representative: Schüssler, Andrea
(86) International application number: PCT/MY2015/050072
(87) International publication number: WO 2016/182424

(56) References cited:
- EP-A1- 0 967 756
- JP-A- 2009 177 282
- US-A1- 2009 307 327

## Description

### Technical Field

This invention is classified under information technology involving the network architecture, methodologies and technique of Instant Messaging(IM), and more specifically to offer its client the management, routing method and equipment to facilitate interconnectivity and communication of the IM servers among the institutions, enterprises or organizations, and public users.

### Background Art

IM is a service on the mobile phones, tablet PCs and computers, to send and receive texts, pictures, audio clips, video clips via a network; it is one of the common and popular applications in the Internet.

With the current available IM applications, this type of concept, method and technology mentioned above doesn't exist. For example, WeChat, QQ, MSN, Skype and Real time eXpert (RTX), their IM service network is on a flat structure, all servers connected to each other, mirror images, utilizing the data from the same database.

For example, the "e-connect" application targets small and medium enterprises through its IM service platform, despite of the introduction of the primary and backup controllers to manage the servers, its main focus is to improve load balance, improve performance on IM service. Others, such as protocol conversion gateway, is to facilitate information exchange of different enterprises IM servers, considered as encapsulation and analysis of IM data.

Document US 2009/307327 discloses an IM system wherein an IM session is established between a first user and a second user depending on whether the first and second users are registered in the same ISP or not.

### Disclosure of Invention

The invention is defined by a method according to claim 1. Further embodiments are defined by the dependent claims.

The purpose of this invention is to serve various institutions, enterprises or organizations and even individuals, providing a new routing method and equipment to facilitate interconnectivity and communication for private and public IM servers in the internet, enterprise intranet, cloud computing platform and various complex network environments. Utilizing this type of IM routers, they can deploy a routing service network to conduct network addressing, making IM servers from different domains to conduct network addressing, enable them to connect each other, and allow users from various enterprises and organizations to have the private and secure

IM, simultaneously having the ability to connect IM with external users.

A new type of IM router as described in this invention, is used to manage IM servers and provide addressing, consisting of the management module and routing module. Among them, the management module is used to maintain the router's own information and IM servers' information management, including: (1) Unique identification Router ID(RID) for every router in the entire network, (2) Information of one or multiple servers that every router manages (3) Unique identification Host ID(HID) of every server in the entire network.

This invention discloses a new IM routing method and routers, to manage IM servers and provides addressing, formed by the management module and routing module. Among them, the management module is used to maintain the router's own information and manage the information of IM servers' information, comprising of:
(1) Unique identification RID for every router in the entire network,
(2) Information of one or multiple servers that every router manages,
(3) Unique identification HID of every server in the entire network;

Routing module provides routing method to facilitate the connectivity and communication between the IM servers based on the identification HID and identification RID previously mentioned above.

Router's own information that maintained by the management module, is comprised of: router name, identification RID, description, network address, status, server identification HID list that it manages, neighbor router identification RID list, routing table and etc. By using the neighbor router identification RID list, the IM router identifies the neighbor router that is connected by network, so that it will send addressing request to its neighbor router if the target server HID is not in the server identification HID list that it manages.

Each IM router will manage one or multiple IM servers, The basic information of the IM servers is stored in the servers HID list of servers managed by the router, the main server identification information have HID, name, description, network address, and status.

Neighbor router is determined at deployment stage of IM router, when the router forwards the addressing request, the router that can be reached by one network hop from the source router is the neighbor router. When the routing service network adds a new IM router, the router will then be configured to have one or more neighbor routers.

Routing table is created upon the information exchange after IM router communicate with its neighbor routers, in order to acquire network address of an IM server, it should forward addressing request to a neighbor router.

IM servers provides IM service to users, it's configuration information comprises of: name, identification HID, description, network address, status, associated router identification RID , connection relation table, user list and etc.
Connection relation table stores name, identification HID, network address, status and other information of other IM server that are connected to this IM server previously, thus the servers can interconnect and communicate without the need to go through IM router for addressing.

The detailed routing method is: when source IM server doesn't have the network address of the target server, the source server submits the target server identification HID to its associated source router and request addressing; subsequently the source router will search the target server's network address in routing service network based on routing strategy; once destination router that manages target server receives the addressing request, it will send back the target server network address to the source router, subsequently the source router shall forward the network address to the source server; in the end, the source server will establish network connection with the target server using this network address.

The routing strategy used by IM router on addressing, are comprising of maximum speed strategy and hop count control strategy; in which maximum speed strategy is referred as the minimum time required for addressing process from router to another router; hop count control strategy is referred as the maximum hop count the router assigned to the addressing request while sending out, so that each time it passes through a router, hop count will reduce by 1, when the hop count is zero(0), addressing request will be discarded and IM router will send back a message of addressing failure.

### Description Of Drawings and Best Mode for Carrying Out The Invention

The following will further elaborate the appendix and detailed description:
FIG.1: Structure diagram of the IM router.
FIG.2: Logical deployment schematic of the invention - A new IM router.

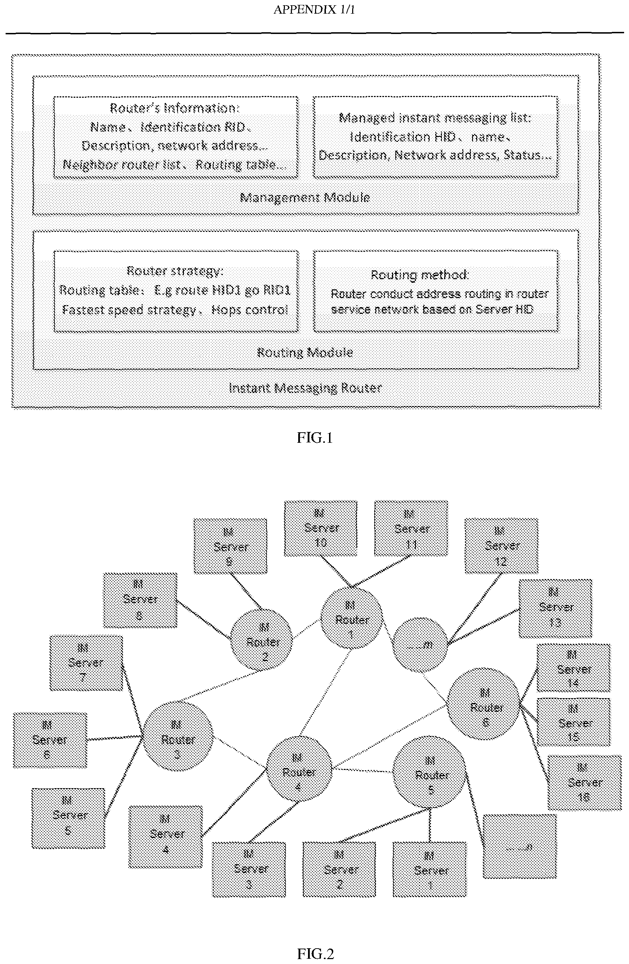

FIG.1 is the structure diagram of the IM router.

This invention discloses a new IM routing method and routers, to manage IM servers and provides addressing, formed by the management module and routing module. Among them, the management module is used to maintain the router's own information and the information of IM servers that it manages, comprising of:
(1) Unique identification RID for every router in the entire network,
(2) Information of one or multiple servers that every router manages,
(3) Unique identification HID of every server in the entire network;

Routing module provides routing method to facilitate the connectivity and communication between the IM servers based on the identification HID and identification RID previously mentioned above.

Router's own information that maintained by management module, are comprising of: router name, identification RID, description, network address, status, server identification HID list that it manages, neighbor router identification RID list, routing table and etc. By using the neighbor router identification RID list, the IM router identifies the neighbor router that is connected to network, so that it will send addressing request to its neighbor router if the target server HID is not in the server identification HID list that it manages.

Each IM router will manage one or multiple IM servers, basic information is stored in these servers HID list of servers managed by the router, the main server identification information have HID, name, description, network address, and status.

Neighbor router is determined at deployment stage of IM router, when the router forwards the addressing request, the router that can be reached by one network hop from the source router, is considered to be the neighbor router. When routing service network increase a new IM router, will configure it to have one or more neighbor routers.

Routing table is created upon the information exchange after IM router communicate with its neighbor routers, in order to acquire network address of an IM server, should forward addressing request to a neighbor router.

IM servers provides IM service to users, it configures information comprising of: name, identification HID, description, network address, status, associated router identification RID, connection relation table, user list and etc.
Connection relation table stores name, identification HID, network address, status and other information of other IM server that are previously connected to this IM server, thus the servers can interconnect and communicate without the need to go through IM router for addressing.

To define routing method: when one source IM doesn't have network address of a target server, the source server will submit the target server identification HID to its associated source router and request addressing; subsequently the source router will search the target server network address in routing service network based on routing strategy; once the destination router that manages the target server receives the addressing request, it will forward the target server network address to the source router, subsequently the source router shall forward the network address to the source server; in the end, the source server will establish network connection with the target server using this network address.

The routing strategy used by IM router on addressing, are comprising of maximum speed strategy and hop count control strategy; in which maximum speed strategy referred as the minimum time required for addressing process from one router to another router; hop count control strategy referred as the maximum hop count the router assigned to the addressing request while sending out, so that each time it passes through a router, hop count will reduce by 1, when the hop count is zero(0), addressing request will be discarded and a message of addressing failure will be sent back.

FIG.2 is the Logical Deployment schematic of the invention - A new IM router.
IM Router1, 2, 3, 4, 5, 6 up to m formed an IM router network, their Identifications are RID1, RID2, RID3, RID4, RID5, RID6 to RIDm; IM Server 1, 2, 3, 4, 5 to n formed IM service network, their identifications are HID1, HID2, HID3, HID4, HID5, to HIDn.

Each router will manage one or multiple servers, as indicated in FIG.2, Router 1 manages Server 10 and 11, Router 2 manages server 8 and 9, Router 3 manages Server 5, 6 and 7, Router 4 manages Server 3 and 4, Router5 manages Server 1 and 2, Router 6 manages server 14 and 15, and 16

In the routing service network formed by routers, when the router forwards the addressing request, the router that can be reached by one network hop from the source router is the neighbor router. For example, neighbor router of Router 1 is Router 2 and Router 4, neighbor router of Router 2 is Router 1, neighbor router of Router 3 is Router 2 and Router 4, neighbor router of Router 4 is Router 1, Router 3, Router 5 and Router 6, neighbor router of Router 5 is only Router 4, neighbor router of Router 6 is Router 4,

Routing table is created upon the information exchange after one IM router communicates with its neighbor router. For example, in Router 3, it will create a route: route HID8 go RID2

The meaning is: If searching for the network address of Server 8, should forward addressing request to Router 2.
Routing table of Route Table 3, will generate three routing table entries:
route HID9 go RID2
route HID3 go RID4
route HID4 go RID4

If Server 10 initiates an IM conversation, it requires to establish network connection with server 3, then the addressing request will go from Router 1 to Router 4. There are 2 possible routes from Router 1 to Router 4:
(1) Router 1→2→3→4, assuming that it takes 1 second.
(2) Router 1→4, assuming that it takes 2 seconds.
If the Routing strategy is maximum speed strategy, then the addressing request from route(2) will be discarded.

For example, a typical group IM as example used to elaborate the addressing process. Assuming user from server 7 initiated a group IM, group users come from server 1, 6, 8, and 16, and server 16 is already in the connection relation table of server 7. The addressing process is as follows:
(1) Server 7 First check its connection relation table, identify server 16 is in the table, then establish network connection with Server16 by using the network address of Server 16 from the connection relation table.
(2) Server 7 forward addressing request to associated Router 3 for Server 1, 6, and 8.
(3) Router 3 checks the server HID list that it manages, identify Server6 in the list, send back the network address of Server 6 to Server 7, subsequently Server 7 establishes network connection with Sever 6.
(4) Router 3 checks the routing table, based on "Route HID8 go RID2", identify that Router 2 knows the network address of Server 8, subsequently forward the addressing request to Router 2.
(5) Router 2 receives addressing request for Server 8, checks its server HID list, send back the network address of Server 8 to Router 3, subsequently Router 3 send back the network address to Server 7, then Server 7 and Server 8 establish network connection.
(7) Router 3 still doesn't know the network address of Server1, so according to the neighbor router's Identification RID list, forward the addressing request of Server 1 to neighbor Router 2 and 4;
(8) Router 2 checks the server HID list and routing table, cannot identify the network address of Server 1, then continue to forward the addressing request to its neighbor Router 1.
(9) Router 4 will check the server HID list that it manages, can't find server 1, but when it checks its routing table, found "Route HID1 go RID5", knowing that Router 5 has the network address of Server1, thus forward the network addressing request to Router 5.
(10) Router 5 receives network addressing request for server 1, checks the server HID list that it manages, send back the network address of server 1 to router 4, subsequently router 4 forward the network address to router 3,then router 3 send back the network address to server 7, server 7 establishes network connection with server 1.
(11) At this point, Server 7 has found all relevant servers' network address for the group message, addressing completed.

We further elaborate on step eight (8), Router1 still do not know the network address of server 1, so it will continues forward addressing request to its neighbor Router 4; we can see that from Router 3 to Router 4 there is 2 possible routes: Assuming address "Router 3 → Router 4" takes shortest time to deliver the addressing request, then based on the maximum speed strategy, the addressing request from "Router 3 → Router 2 → Router 1 → Router 4" will be discarded.

Network addressing request sent from the router has hop count parameters, effective preventing packet storm in routing service network, ensuring addressing efficiency.

As shown in FIG.2, assuming IM Server 6 and 7 are public IM servers targeting public users, Server 8 and 9 are enterprise IM servers, Server 1 and 2 are IM servers belonging to an organization; these public users, enterprises or organizations users can have the advantage of using their own respective public or private IM servers to interconnect and connect IM.

## Claims

1. An Instant Messaging, IM, routing method implemented in an IM router network comprising a plurality of IM routers, wherein each IM router of the plurality of IM routers is an IM router that manages one or multiple IM servers, wherein the IM router comprises a management module and a routing module, wherein the management module is used to maintain the IM router's own information and the information of IM servers that the IM router manages, which mainly consists of:
(1) Unique identification Router ID, RID, for every IM router in the entire network,
(2) Information of one or multiple IM servers that every IM router manages,
(3) Unique identification Host ID, HID, of every IM server in the entire network;
wherein the routing module is used to provide the IM routing method,
wherein the routing method comprises:
submitting, by a source IM server, a target IM server's HID to an associated source IM router and sending an addressing request to the associated source IM router by the source IM server;
searching, by the associated source IM router, the target IM server's network address in the IM router network based on a routing strategy, wherein the searching comprises forwarding the addressing request to a destination router upon determining that the destination router manages the target IM server sending back, by the destination router, the target IM server's network address to the associated source IM router, once the destination IM router receives the addressing request from the source IM router;
forwarding, by the associated source IM router, the target IM server's network address to the source IM server;
establishing, by the source IM server, a network connection with the target IM server using the target IM server's network address.

2. The IM routing method of claim 1, wherein the IM router's own information comprises: name, identification RID, description, network address, status, list of the IM server HID that the IM router manages, list of neighbor router identification RID and routing table.

3. The IM routing method of claim 2, wherein the list of the IM server HID that the IM router manages comprises: IM server identification HID, name, description, network address, and status.

4. The IM routing method of claim 2, wherein a neighbor router is determined at deployment stage of the IM router, and wherein, when the IM source router forwards the addressing request, the router that can be reached by one network hop from the source router, is considered to be the neighbor router.

5. The IM routing method of claim 2, wherein the routing table is created upon an information exchange after IM router communicate with neighbor router, and wherein, in order to acquire network address of IM servers, the IM route shall forward addressing request to a neighbor router.

6. The IM routing method of claim 1, wherein the information of each of the one or multiple servers comprises: name, identification HID, description, network address, status, associated router identification RID, connection relation table, and user list.

7. The IM routing method of claim 6, wherein the connection relation table comprises: the table stores name, identification HID, network address, status and information of other IM server that are previously connected to the respective IM server.

8. The IM routing method of claim 1, wherein the routing strategy executes a maximum speed strategy and a hop count control strategy; in which the maximum speed strategy is referred as the minimum time required for addressing process from router to another router; the hop count control strategy is referred as the maximum hop count the router assigned to the addressing request while sending out, wherein each time the addressing request passes through a router, the hop count will be reduced by 1 and, when the hop count is zero, the addressing request will be discarded and the IM router will send back a message of addressing failure.

## Patentansprüche

1. Routingverfahren für Sofortnachrichten (IM), das in einem IM-Router-Netzwerk implementiert ist, das eine Vielzahl von IM-Routern aufweist, wobei jeder IM-Router der Vielzahl von IM-Routern ein IM-Router ist, der einen oder mehrere IM-Server verwaltet, wobei der IM-Router ein Verwaltungsmodul und ein Routing-Modul aufweist,
wobei das Verwaltungsmodul dazu verwendet wird, die Eigeninformationen des IM-Routers und die Informationen von IM-Servern zu pflegen, die der IM-Router verwaltet, die im Wesentlichen bestehen aus:
(1) einer eindeutigen Router-Kennungs-ID, RID, für jeden IM-Router im gesamten Netzwerk,
(2) Information von einem oder mehreren IM-Servern, den/die jeder IM-Router verwaltet,
(3) einer eindeutigen Host-Kennungs-ID, HID, eines jeden IM-Servers im gesamten Netzwerk;
wobei das Routing-Modul dazu verwendet wird, das IM-Routingverfahren bereitzustellen,
wobei das Routingverfahren umfasst:
Übermitteln einer Ziel-IM-Server-HID durch einen Quell-IM-Server an einen zugehörigen Quell-IM-Router und Senden einer Adressierungsanfrage an den zugehörigen Quell-IM-Router durch den Quell-IM-Server,
Suchen, durch den zugehörigen Quell-IM-Router, der Ziel-IM-Server-Netzwerkadresse im IM-Router-Netzwerk beruhend auf einer Routing-Strategie, wobei das Suchen umfasst, die Adressierungsanfrage an einen Destinations-Router weiterzuleiten, und zwar auf die Feststellung hin, dass der Destinations-Router den Vorgang verwaltet, dass der Ziel-IM-Server über den Destinations-Router die Ziel-IM-Server-Netzwerkadresse an den zugehörigen Quell-IM-Router zurücksendet, sobald der Destinations-IM-Router die Adressierungsanfrage vom Quell-IM-Router erhält;
Weiterleiten, durch den zugehörigen Quell-IM-Router, der Ziel-IM-Server-Netzwerkadresse an den Quell-IM-Server;
Einrichten, durch den Quell-IM-Server, einer Netzwerkverbindung mit dem Ziel-IM-Server unter Verwendung der Ziel-IM-Server-Netzwerkadresse.

2. IM-Routingverfahren nach Anspruch 1, wobei die Eigeninformationen des IM-Routers umfassen: Name, Kennung RID, Beschreibung, Netzwerkadresse; Status, Liste der IM-Server-HID, die der IM-Router verwaltet, Liste der Nachbar-Router-Kennung RID und Routing-Tabelle.

3. IM-Routingverfahren nach Anspruch 2, wobei die Liste der IM-Server-HID, die der IM-Router verwaltet, umfasst: IM-Server-Kennung MID, Name, Beschreibung, Netzwerkadresse und Status.

4. IM-Routingverfahren nach Anspruch 2, wobei ein Nachbar-Router in einem Errichtungsstadium des IM-Routers bestimmt wird und wobei, wenn der IM-Quell-Router die Adressierungsanfrage weiterleitet, der Router, der ausgehend vom Quell-Router über einen einzigen Netzwerksprung erreicht werden kann, als der Nachbar-Router angesehen wird.

5. IM-Routingverfahren nach Anspruch 2, wobei die Routing-Tabelle auf einen Informationsaustausch hin erzeugt wird, nachdem ein IM-Router mit einem Nachbar-Router kommuniziert, und wobei, um die Netzwerkadresse von IM-Servern zu erlangen, der IM-Router die Adressierungsanfrage an einen Nachbar-Router weiterleitet.

6. IM-Routingverfahren nach Anspruch 1, wobei die Informationen jedes des einen oder der mehreren Server umfassen: Name, Kennung HID, Beschreibung, Netzwerkadresse, Status, zugehörige Router-Kennung RID, Verbindungsrelationstabelle und Benutzerliste.

7. IM-Routingverfahren nach Anspruch 6, wobei die Verbindungsrelationstabelle umfasst: Die Tabelle speichert den Namen, die Kennung HID, die Netzwerkadresse, den Status und Informationen anderer IM-Server, die zuvor mit dem jeweiligen IM-Server verbunden waren.

8. IM-Routingverfahren nach Anspruch 1, wobei die Routing-Strategie eine Strategie maximaler Geschwindigkeit und eine Sprungzählwert-Steuerstrategie ausführt; wobei sich die Strategie maximaler Geschwindigkeit auf die Mindestdauer bezieht, die für einen Adressierungsprozess von einem Router zu einem anderen Router erforderlich ist; und die Sprungzählwert-Steuerstrategie sich auf den maximalen Sprungzählwert eines der Adressierungsanfrage zugehörigen Routers während des Aussendens bezieht, wobei jedes Mal, wenn die Adressierungsanfrage durch einen Router läuft, der Sprungzählwert um 1 reduziert wird und, wenn der Sprungzählwert Null beträgt, die Adressierungsanfrage verworfen wird und der IM-Router eine Nachricht des Fehlschlags der Adressierung zurücksendet.

## Revendications

1. Procédé de routage de messagerie instantanée, IM, mis en œuvre dans un réseau de routeurs IM comprenant une pluralité de routeurs IM, dans lequel chaque routeur IM de la pluralité de routeurs IM est un routeur IM qui gère un ou de multiples serveurs IM, où le routeur IM comprend un module de gestion et un module de routage,
dans lequel le module de gestion est utilisé pour maintenir les informations propres du routeur IM et les informations des serveurs IM que gère le routeur IM qui consistent principalement de:
(1) Identification unique ID de Routeur, RID, pour chaque routeur IM dans tout le réseau,
(2) Informations d'un ou de multiples serveurs IM que gère chaque routeur IM,
(3) Identification unique ID d'Hôte, HID, de chaque serveur IM dans tout le réseau; dans lequel le module de routage est utilisé pour permettre le procédé de routage IM, dans lequel le procédé de routage comprend le fait de:
soumettre, par un serveur IM de source, l'HID d'un serveur IM cible à un routeur IM de source associé et envoyer une demande d'adressage au routeur IM de source associé par le serveur IM de source;
rechercher, par le routeur IM de source associé, l'adresse de réseau du serveur IM cible dans le réseau de routeurs IM sur base d'une stratégie de routage, où la recherche comprend le fait d'envoyer la demande d'adressage à un routeur de destination lorsqu'il est déterminé que le routeur de destination gère le serveur IM cible;
renvoyer, par le routeur de destination, l'adresse de réseau du serveur IM cible au routeur IM associé lorsque le routeur IM de destination reçoit la demande d'adressage du routeur IM de source;
envoyer, par le routeur IM de source associé, l'adresse de réseau du serveur IM cible au serveur IM de source;
établir, par le serveur IM de source, une connexion de réseau avec le serveur IM cible à l'aide de l'adresse de réseau du serveur IM cible.

2. Procédé de routage IM selon la revendication 1, dans lequel les informations propres du routeur IM comprennent: le nom, l'identificateur RID, la description, l'adresse de réseau, l'état, la liste des HID de serveur IM que gère le routeur IM, la liste d'identificateurs de routeur RID voisins et le tableau de routage.

3. Procédé de routage IM selon la revendication 2, dans lequel la liste des HID de serveur IM que gère le routeur IM comprend: l'identification de serveur IM HID, le nom, la description, l'adresse de réseau et l'état.

4. Procédé de routage IM selon la revendication 2, dans lequel un routeur voisin est déterminé à l'étape de déploiement du routeur IM, et dans lequel, lorsque le routeur IM de source envoie la demande d'adressage, le routeur qui peut être atteint par un saut de réseau du routeur source est considéré comme étant le routeur voisin.

5. Procédé de routage IM selon la revendication 2, dans lequel le tableau de routage est créé lors d'un échange d'informations après que le routeur IM ait communiqué avec le routeur voisin, et dans lequel, pour acquérir l'adresse de réseau de serveurs IM, le routeur IM doit envoyer la demande d'adressage à un routeur voisin.

6. Procédé de routage IM selon la revendication 1, dans lequel les informations de chacun de l'un ou des multiples serveurs comprennent: le nom, l'identification HID, la description, l'adresse de réseau, l'état, l'identificateur de routeur RID associée, le tableau de rapports de connexion et la liste d'utilisateurs.

7. Procédé de routage IM selon la revendication 6, dans lequel le tableau de rapports de connexion comprend: le tableau mémorise le nom, l'identificateur HID, l'adresse de réseau, l'état et les informations d'autres serveurs IM qui sont connectés auparavant au serveur IM respectif.

8. Procédé de routage IM selon la revendication 1, dans lequel la stratégie de routage exécute une stratégie de vitesse maximale et une stratégie de contrôle du nombre de sauts; dans lequel la stratégie de vitesse maximale est appelée le temps minimum requis pour le processus d'adressage d'un routeur à un autre routeur; la stratégie de contrôle du nombre de sauts est appelée le nombre maximum de sauts que le routeur a attribué à la demande d'adressage lors de l'envoi, où, chaque fois que la demande d'adressage passe par un routeur, le nombre de sauts est réduit de 1 et, lorsque le nombre de sauts est zéro, la demande d'adressage sera écartée et le routeur IM retournera un message d'adressage échoué.
